# EUROPEAN PATENT APPLICATION

(11) **EP 2 469 393 A2**
(43) Date of publication of application: **27.06.2012**
(21) Application number: 11192508.7
(22) Date of filing: 08.12.2011
(51) Int. Cl.: G06F 3/048

(54) **Image display control apparatus and image display control method**

(30) Priority: 21.12.2010 JP 2010284323
(71) Applicant: Sony Corporation, Tokyo 108-0075 (JP)
(72) Inventor: Nunomaki, Takashi, Tokyo, 108-0075 (JP)
(74) Representative: Beder, Jens

(57) **Abstract**

An image display control apparatus and method that detect a proximity of an object to a display. Depending on a movement or position of the object relative to the display, a controller causes images to be presented on said display for viewing. The images may be scrolled on the display in sequence, or certain images may be jumped to in response to particular object movements. The interval of the jumping may be set in a menu that is optionally presented on the display.

## Description

### BACKGROUND

The present disclosure relates to image display control apparatuses and image display control methods, and particularly relates to an image display control apparatus and an image display control method which enable viewing of a number of pictures more easily.

In some electronic apparatuses including touch panels as display units, images displayed in the display units are scrolled by dragging operations and flicking operations performed on the touch panels. Furthermore, a movement of a finger of a user may be recognized by a camera included in a cellular phone and an image displayed in a display unit may be scrolled in accordance with the movement of the finger (refer to Japanese Unexamined Patent Application Publication No. 2009-260907, for example).

### SUMMARY

Various aspects and features of the invention are defined in the appended claims. In recent years, high-capacity recording media for recording content have been developed and a large number of images are allowed to be stored in portable electronic apparatuses. Therefore, there is a demand for an operation method for easily viewing a number of images.

It is desirable to view a large number of images more easily.

According to an exemplary image display control apparatus embodiment, the apparatus includes a detector that detects an object being in proximity to a display; the display; and a controller that changes from a first image to a second image in response to a movement of the object that remains in proximity to the display.

According to one aspect of the apparatus, the detector also detects a touch of the object to the display, and the controller processes the touch differently than the object being in proximity to the display.

According to another aspect of the apparatus, the detector detects multiple touches of the object to the display as a tapping operation.

According to another aspect of the apparatus, the controller responds to the detector detecting the object remaining in proximity to the display while the object moves a predetermined lateral distance over a surface of the display by scrolling the first image off the display while scrolling the second image on the display.

According to another aspect of the apparatus, the detector detects a last lateral speed of the object, and the controller performs a proximity flick operation when the last lateral speed of the object is less than a predetermined threshold, the proximity flick operation performs scroll animation of the second image on the display.

According to another aspect of the apparatus, the controller determines if a lateral movement amount of the object while remaining in proximity to the display is less than a predetermined threshold, and when less, the controller returns the first image to an initial position on the display before the detector detected the object being in proximity.

According to another aspect of the apparatus, the controller determines if a lateral movement amount of the object while remaining in proximity to the display is more than a predetermined threshold, and when more, the controller scrolls the second image on the display.

According to another aspect of the apparatus, the controller is configured to display a menu when in a proximity flicking operation mode, and jumps to a predetermined image in an ordered set of stored images so the predetermined image is displayed when the object is detected as performing a proximity flicking movement.

According to another aspect of the apparatus, the ordered set of stored images are ordered by at least one of date and a storage folder.

According to another aspect of the apparatus, the controller displays a proximity menu when a time that the object remains in proximity exceeds a predetermined threshold time.

According to another aspect of the apparatus, the controller displays the proximity menu in accordance with a position of the object with respect to the display.

According to another aspect of the apparatus, the controller deletes the proximity menu when a latest speed of the object when moved away from the display is less than a predetermined threshold speed.

According to another aspect of the apparatus, the controller determines the object performs a proximity flicking movement when a latest speed of the object when moved away from the display is greater than a predetermined threshold speed, and the controller performs a scroll animation of the second image on the display that corresponds with a content of the proximity menu.

According to another aspect of the apparatus, an electrostatic touch panel that includes the detector and the display.

According to another aspect of the apparatus, the controller performs scroll animation of the first image and the second image with a first effect in response to the touch and with a second effect in response to the object being in proximity to the display.

According to another exemplary image display control apparatus embodiment, the apparatus includes a detector that detects an object being in proximity to a display; the display; and a controller that responds to a change in a proximity of the object by changing from a first image to a second image, the second image being selected from a plurality of images stored in a predetermined order.

According to one aspect of the apparatus, the detector also detects a touch of the object to the display, and the controller processes the touch differently than the object being in proximity to the display.

According to an exemplary image display control method embodiment, the method includes detecting with a proximity detector an object being in proximity to a display; and changing on the display with a controller from a first image to a second image in response to a movement of the object while the object remains in proximity to the display.

According to another exemplary image display control method embodiment, the method includes detecting with a proximity detector an object being in proximity to a display; and responding with a controller to a change in a proximity of the object by changing from a first image to a second image, the second image being selected from a plurality of images stored in a predetermined order.

Accordingly, a large number of images may be viewed more easily.

### BRIEF DESCRIPTION OF THE DRAWINGS

Embodiments of the invention are now described with reference to the enclosed drawings, throughout which like parts are referred to by like references and in which
Fig. 1 is a block diagram illustrating a configuration of an image pickup apparatus serving as an image display control apparatus according to an embodiment of the present disclosure;
Figs. 2A and 2B are perspective views illustrating configurations of appearances of the image pickup apparatus shown in Fig. 1;
Fig. 3 is a diagram illustrating a screen displayed by first display control;
Fig. 4 is a diagram illustrating another screen displayed by the first display control;
Fig. 5 is a diagram illustrating a further screen displayed by the first display control;
Fig. 6 is a flowchart illustrating a first display control process;
Fig. 7 is a diagram illustrating a screen displayed by second display control;
Fig. 8 is a flowchart illustrating a second display control process;
Fig. 9 is a flowchart illustrating proximity menu display process shown in Fig. 8; and
Fig. 10 is a block diagram illustrating a configuration of a computer according to another embodiment of the present disclosure.

### DETAILED DESCRIPTION OF EMBODIMENTS

### Configuration Example of Image Pickup Apparatus

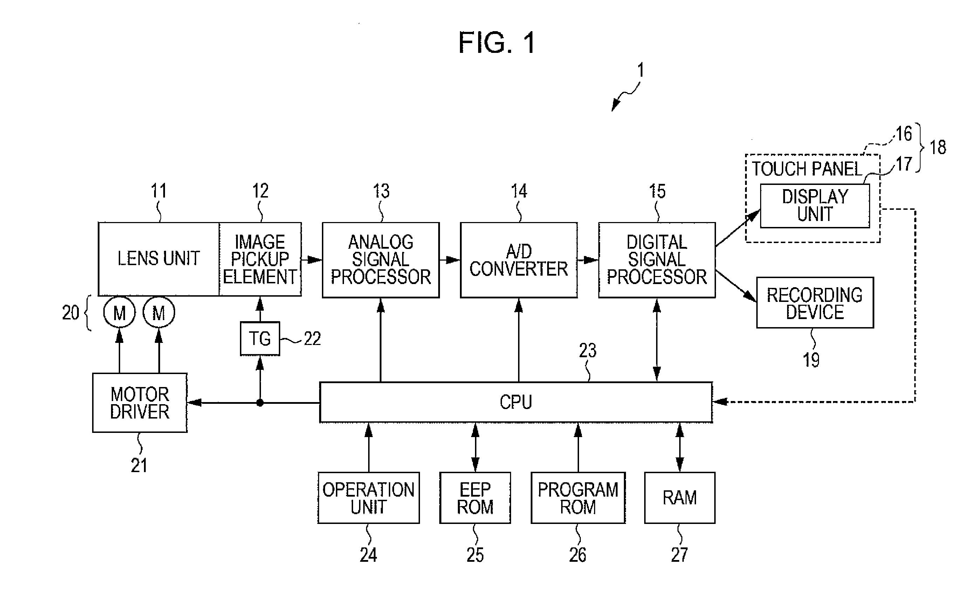

Fig. 1 is a block diagram illustrating a configuration of an image pickup apparatus serving as an image display control apparatus according to an embodiment of the present disclosure.

An image pickup apparatus 1 shown in Fig. 1 includes a lens unit 11 to a RAM 27.

The lens unit 11 includes a photographing lens, an aperture, a focus lens, and the like. On an optical path of object light which emitted through the lens unit 11, an image pickup element 12 such as a CCD (Change Coupled Device) sensor is disposed.

The image pickup element 12, an analog signal processor 13, an A/D (Analog/Digital) converter 14, and a digital signal processor 15 are connected in this order.

Furthermore, a display unit 17 and a recording device 19 are connected to the digital signal processor 15. A touch panel 16 is disposed on an image display screen of the display unit 17. The touch panel 16 and the display unit 17 constitute a touch screen 18. The display unit 17 includes a liquid crystal display (LCD) or the like.

To the lens unit 11, an actuator 20 used to control the aperture included in the lens unit 11 and move the focus lens included in the lens unit 11 is connected. To the actuator 20, a motor driver 21 is also connected. The motor driver 21 controls driving of the actuator 20.

A CPU (Central Processing Unit) 23 controls the entire image pickup apparatus 1. Therefore, the analog signal processor 13, the A/D converter 14, the digital signal processor 15, the motor driver 21, a TG (Timing Generator) 22, an operation unit 24, an EEPROM (Electrically Erasable Programmable ROM) 25, a program ROM (Read Only Memory) 26, the RAM (Random Access Memory) 27, and the touch panel 16 are connected to the CPU 23.

The touch panel 16 which is an electrostatic touch panel, for example, detects tapping (touch) performed on the touch panel 16 and outputs information on a tapped position on the touch panel 16 to the CPU 23. Furthermore, the touch panel 16 may detect the user's finger approaching the touch panel 16 within a predetermined distance (hereinafter referred to as "proximity", where appropriate) according to change (a level) of electrostatic capacitance even though the user's finger has not yet touched the touch panel 16. A distance within which the touch panel 16 may detect the proximity is a distance within approximately 20 mm from the screen. Within a distance of 10 mm, a position on the touch panel 16 to which the finger comes close may be recognized. Note that a target of detection of contact or proximity using the touch panel 16 is not limited to a user's finger, but similar dielectric object may be detected. Hereinafter, it is assumed that a user's finger is to be detected.

The user may perform a dragging operation and a flicking operation by touching the touch panel 16 or bringing the finger close to the touch panel 16. The CPU 23 which obtains a signal from the touch panel 16 may detect such a user's operation.

The dragging operation and the flicking operation are the same as each other in terms of an operation of tracing a plane which is parallel to the touch panel 16. However, the dragging operation and the flicking operation are different from each other in that when the dragging operation is performed, a speed of the finger which moves (or which is immediately before moving) away from the plane is low (not larger than a predetermined value) whereas when the flicking operation which is an operation of flick is performed, a speed of the finger which moves (or which is immediately before moving) away from the plane is high (larger than the predetermined value). In other words, the dragging operation is an operation of stopping a movement of the finger which is performing tracing and moving the finger upward away from the traced plane whereas the flicking operation is an operation of moving the finger which is performing tracing laterally away from the traced plane while a speed of the movement is maintained.

The recording device 19 is constituted by a removable recording medium including an optical disc such as a DVD (Digital Versatile Disc) and a semiconductor memory such as a memory card. The recording device 19 records a (signal of) image obtained through image capturing. The recording device 19 is detachable from a body of the image pickup apparatus 1.

The EEPROM 25 stores various set information. The EEPROM 25 further stores other information such as information to be held even when a power source is brought to an off state.

The program ROM 26 stores programs to be executed by the CPU 23 and data used to execute the programs.

The RAM 27 serving as a work area temporarily stores programs and data used when the CPU 23 executes various processes.

Hereinafter, entire operation of the image pickup apparatus 1 of the configuration in Fig. 1 will be briefly described.

The CPU 23 controls the various units included in the image pickup apparatus 1 by executing the programs recorded in the program ROM 26. Then, the CPU 23 executes predetermined processes including an image capturing process and a process of controlling display of an image in the display unit 17 in accordance with a signal supplied from the touch panel 16 or a signal supplied from the operation unit 24.

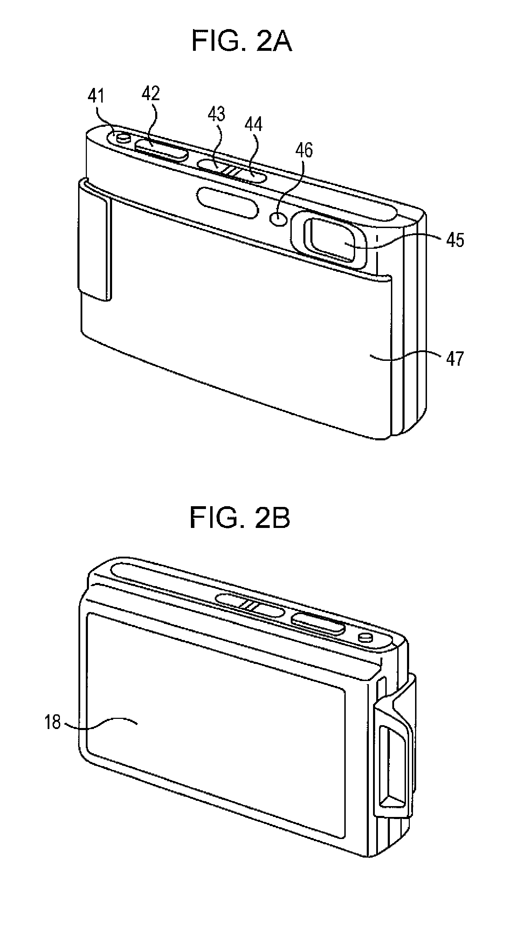

The operation unit 24 is operated by the user and supplies a signal corresponding to the operation to the CPU 23. The operation unit 24 includes a zoom lever (TELE/WIDE) 41 and a shutter button 42 which will be described hereinafter with reference to Fig. 2, for example.

When the actuator 20 is driven, the lens unit 11 is exposed from or accommodated in a case of the image pickup apparatus 1. Furthermore, when the actuator 20 is driven, the aperture included in the lens unit 11 is controlled and the focus lens included in the lens unit 11 is moved.

The TG 22 supplies a timing signal to the image pickup element 12 under control of the CPU 23. In accordance with the timing signal, an exposure time and the like in the image pickup element 12 are controlled.

The image pickup element 12 operates in response to the timing signal supplied from the TG 22 so as to receive object light incident through the lens unit 11 and perform photoelectric conversion. Then, the image pickup element 12 supplies an analog image signal corresponding to an amount of the received light to the analog signal processor 13. Here, the motor driver 21 drives the actuator 20 under control of the CPU 23.

The analog signal processor 13 performs an analog signal process such as amplification on the analog image signal supplied from the image pickup element 12 under control of the CPU 23. A resultant analog image signal is supplied from the analog signal processor 13 to the A/D converter 14.

The A/D converter 14 performs A/D conversion on the analog image signal supplied from the analog signal processor 13 under control of the CPU 23. A resultant digital image signal is supplied from the A/D converter 14 to the digital signal processor 15.

The digital signal processor 15 performs a digital signal process such as a noise removal process on the digital image signal supplied from the A/D converter 14 under control of the CPU 23. The digital signal processor 15 causes the display unit 17 to display an image corresponding to the digital image signal.

Furthermore, the digital signal processor 15 performs compression encoding on the digital image signal supplied from the A/D converter 14 in accordance with a predetermined compression encoding method such as JPEG (Joint Photographic Experts Group). The digital signal processor 15 causes the recording device 19 to record the digital image signal which has been subjected to the compression encoding.

The digital signal processor 15 also reads the digital image signal which has been subjected to the compression encoding from the recording device 19 and performs decompression decoding in accordance with a decompression decoding method corresponding to the predetermined compression encoding method. The digital signal processor 15 causes the display unit 17 to display an image corresponding to the digital image signal.

In addition, the digital signal processor 15 generates an image of an AF (auto focus) frame used to fulfill an AF function and an image of a menu button under control of the CPU 23 and causes the display unit 17 to display the images.

The image captured by the image pickup element 12 is displayed in the display unit 17. In this case, the AF frame is set on the image displayed in the display unit 17. In accordance with an image included in the AF frame, focus control is performed.

As described above, the image pickup apparatus 1 has the AF function. The image pickup apparatus 1 further has an AE (Automatic Exposure) function and an AWB (Auto White Balance) function. These functions are realized when the CPU 23 reads and executes programs stored in the program ROM 26. Furthermore, the AF function, the AE function, and the AWB function are merely examples of functions included in the image pickup apparatus 1. That is, the image pickup apparatus 1 has various functions relating to photographing.

Figs. 2A and 2B are perspective views illustrating configurations of appearances of the image pickup apparatus 1 shown in Fig. 1.

Note that, among planes of the image pickup apparatus 1, a plane which faces an object when the user captures the object, that is, a plane including the lens unit 11 disposed thereon is referred to as a "front face". On the other hand, among the planes of the image pickup apparatus 1, a plane which faces the user when the user captures the object, that is, a plane positioned opposite to the front face is referred to as a "rear face". Furthermore, among the planes of the image pickup apparatus 1, a plane located on an upper side and a plane disposed on a lower side when the user captures the object are referred to as an "upper face" and a "lower face", respectively.

Fig. 2A is a perspective view illustrating a configuration of an appearance of the front face of the image pickup apparatus 1 shown in Fig. 1. Fig. 2B is a perspective view illustrating a configuration of an appearance of the rear face of the image pickup apparatus 1.

The front face of the image pickup apparatus 1 may be covered by a lens cover 47. When the lens cover 47 is opened downward in the drawing, a state shown in Fig. 2A is obtained. As shown in Fig. 2A, an upper portion of the front face in which the lens cover 47 is removed includes a photographing lens 45 and an AF illuminator 46 included in the lens unit 11 in this order from the right side.

The AF illuminator 46 also serves as a self-timer lamp. The upper face of the image pickup apparatus 1 includes the zoom lever (TELE/WIDE) 41, the shutter button 42, a reproducing button 43, and a power button 44 arranged thereon in this order from the left side of Fig. 2A. The zoom lever 41, the shutter button 42, the reproducing button 43, and the power button 44 are included in the operation unit 24 shown in Fig. 1.

As shown in Fig. 2B, the touch screen 18 is disposed on the entire rear face of the image pickup apparatus 1.

In the touch screen 18, an image captured by the image pickup element 12 is displayed in a photographing mode for capturing an object whereas an image recorded in the recording device 19 is displayed in a reproducing mode for displaying an image which has been captured. In addition, in the touch screen 18, a menu button used to set (change) various setting items of the image pickup apparatus 1, a list display button used to display a list of a plurality of images which have been stored, a deletion button used to delete a displayed image, and a photographing mode button used to enter the photographing mode are displayed as GUIs (Graphical User Interfaces).

### Image Display Control in First Embodiment

Next, a first display control performed by the image pickup apparatus 1 (CPU 23) which is image display control according to a first embodiment of the present disclosure will be described.

In the image pickup apparatus 1, a captured image which is read from the recording device 19 and which is displayed in the display unit 17 may be scrolled by performing an operation of touching and tracing the touch screen 18 by a finger of the user (a dragging operation and a flicking operation) in the reproducing mode. Furthermore, in the image pickup apparatus 1, as with the operation of touching and tracing the touch screen 18, by performing an operation of bringing a finger of the user close to the touch screen 18 and tracing the touch screen 18, a captured image may be scrolled.

### Example of Screen in First Display Control

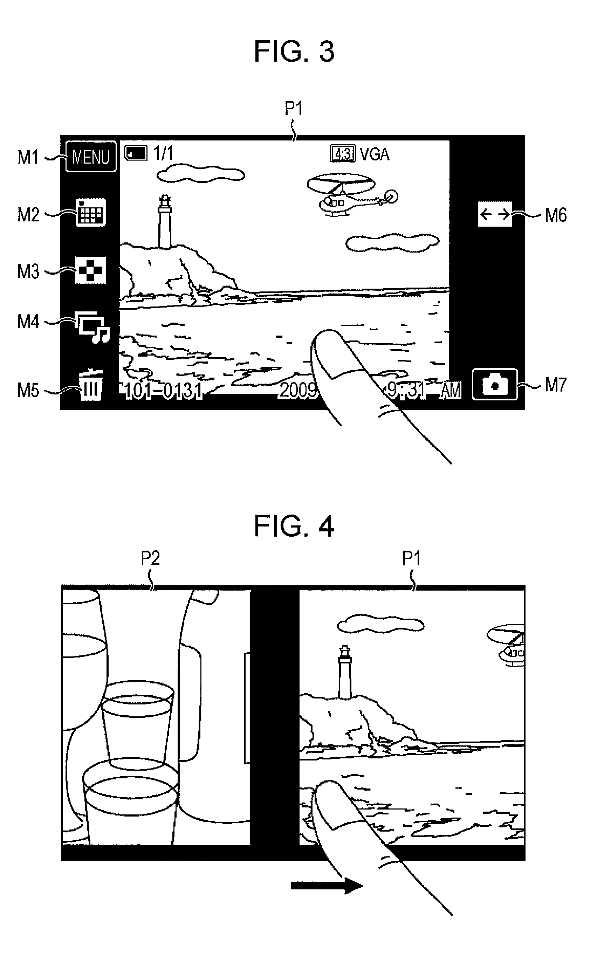

Fig. 3 shows a state in which the user's finger is brought close to the touch screen 18 in the reproducing mode.

A captured image P1 is displayed at the center of the display screen in the reproducing mode. A menu button M1, a calendar display button M2, a list display button M3, a slide-show button M4, and a deletion button M5 are displayed in a left-end region of the display screen and a wide-zoom button M6 and a photographing mode button M7 are displayed in a right-end region of the display screen (as images). When the user's finger is merely brought close to the touch screen 18, the display screen is not changed.

Fig. 4 shows a display screen in a state in which the user's finger brought close to the touch screen 18 as shown in Fig. 3 is laterally (rightward) moved while a proximity state is maintained.

The image pickup apparatus 1 (CPU 23) detects the movement of the user's finger in the detected proximity state by a certain distance or more. Then, in the image pickup apparatus 1, the captured image P1 which is disposed at the center of the display screen is scrolled in accordance with the movement of the finger. As shown in Fig. 4, when the captured image P1 is scrolled rightward, a portion of a captured image P2 which is to be displayed next is displayed in the left side of the captured image P1.

The relationship between the captured images P1 and P2 will be described. In the recording device 19, a plurality of captured images obtained through image capturing performed by the image pickup apparatus 1 are recorded. In the image pickup apparatus 1, the captured images are displayed one by one forward or backward in a predetermined order such as in order of captured date, in order of file names (alphanumeric characters), or in order of arrangement in the recording device 19. The captured image P2 is displayed after the captured image P1 in order of display of the captured images forward or backward.

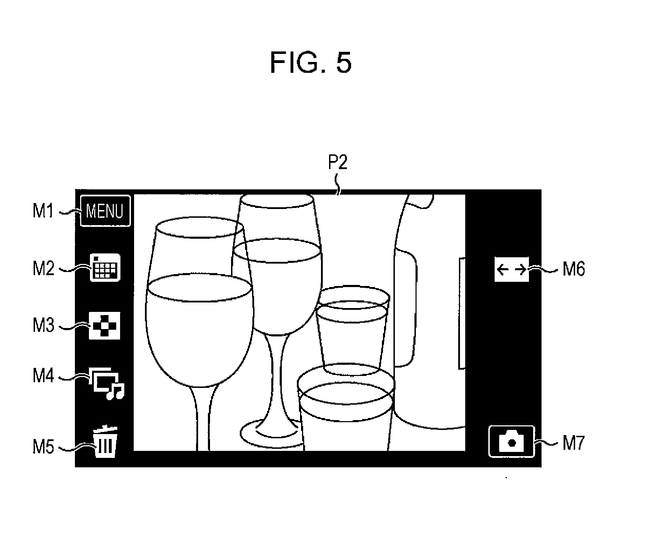

Fig. 5 shows a display screen displayed after the user's finger is further moved from the state shown in Fig. 4 and moved away from the touch screen 18 while a speed of the movement is not lowered. That is, Fig. 5 shows a display screen displayed after the flicking operation (proximity flicking operation) is performed by the user's finger which is in the proximity state.

The image pickup apparatus 1 detects the speed at the time when the user's finger in the proximity state is moved away from the touch screen 18. Since the speed is equal to or larger than a predetermined threshold value, the image pickup apparatus 1 determines that the proximity flicking operation has been performed. Then, the image pickup apparatus 1 displays the entire captured image P2 to be displayed next which is displayed when the captured image P1 is scrolled rightward as shown in Fig. 4. That is, the captured image P1 shown in Fig. 3 is replaced by the captured image P2. Here, in the display screen, the captured image P2 is also scrolled along with the rightward scroll of the captured image P1, and the captured image P2 is displayed as scroll animation gradually from a right portion of the captured image P2.

### Flowchart of First Display Control

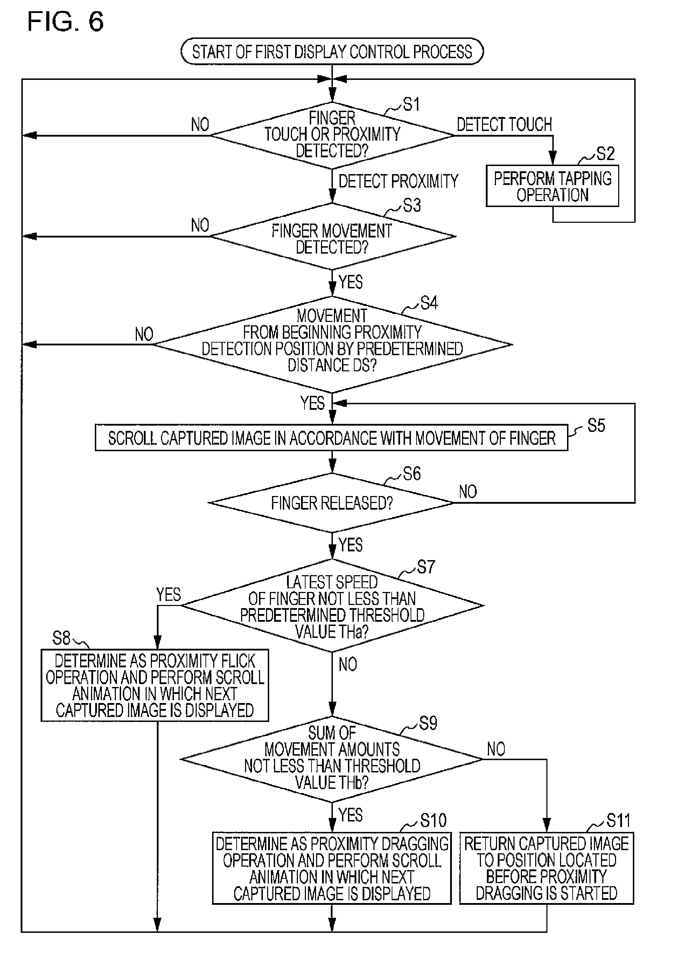

Fig. 6 is a flowchart illustrating a process of the first display control described with reference to Figs. 3 to 5.

First, in step S1, the image pickup apparatus 1 determines whether touch or proximity of the user's finger relative to the touch panel 16 is detected.

The process in step S1 is repeatedly performed until the touch or the proximity of the user's finger is detected. Then, when it is determined that the touch of the user's finger is detected in step S1, the process proceeds to step S2 where the image pickup apparatus 1 executes a predetermined process (tapping process) corresponding to the touch of the finger. Thereafter, the process returns to step S1.

On the other hand, when it is determined that the proximity of the user's finger is detected in step S1, the process proceeds to step S3 where the image pickup apparatus 1 determines whether a movement of the finger detected as a proximity state is detected. When it is determined that the movement of the finger is not detected in step S3, the process returns to step S1.

On the other hand, when it is determined that the movement of the finger is detected in step S3, the process proceeds to step S4 where the image pickup apparatus 1 determines whether the finger moves from a first proximity detection position by a distance DS or more. When it is determined that the finger does not move from the first proximity detection position by the predetermined distance DS or more, the process returns to step S1.

On the other hand, when it is determined that the finger moves from the first proximity detection position by the predetermined distance DS or more in step S4, the process proceeds to step S5 where the image pickup apparatus 1 scrolls a captured image in accordance with the movement of the finger detected as the proximity state.

Then, in step S6, the image pickup apparatus 1 determines whether the finger detected as the proximity state moves away from the screen. When it is determined that the finger detected as the proximity state does not move away from the screen in step S6, the process returns to step S5 where the captured image is scrolled in accordance with a movement of the finger.

On the other hand, when it is determined that the finger detected as the proximity state moves away from the screen in step S6, the process proceeds to step S7 where the image pickup apparatus 1 determines whether the latest speed of the finger (speed immediately before the finger moves away from the screen) is equal to or larger than a predetermined threshold value THa.

When it is determined that the latest speed of the finger is equal to or larger than the predetermined threshold value THa in step S7, the process proceeds to step S8 where the image pickup apparatus 1 determines that the proximity flicking operation is performed and performs scroll animation is performed to display the next captured image.

On the other hand, when it is determined that the latest speed of the finger is smaller than the predetermined threshold value THa in step S7, the process proceeds to step S9 where the image pickup apparatus 1 determines whether a sum of movements of the finger from the first proximity detection position to a position in which the finger moves away is equal to or larger than a predetermined threshold value THb. That is, it is determined whether a movement distance of the finger from the first proximity detection position to the position in which the finger moves away is equal to or larger than the predetermined threshold value THb.

When it is determined that the sum of the movement amounts of the finger is equal to or larger than the predetermined threshold value THb in step S9, the process proceeds to step S10 where the image pickup apparatus 1 determines that a proximity dragging operation has been performed and perform scroll animation to display the next captured image.

On the other hand, when it is determined that the sum of the movement amounts of the finger is smaller than the predetermined threshold value THb in step S9, the process proceeds to step S11 where the image pickup apparatus 1 performs scroll animation so that the scrolled captured image is restored to the center of the screen (a position located before the proximity dragging operation is started).

After the processes in step S8, S10, and S11, the process returns to step S1 and the processes following the process of step S1 are executed again.

The first display control process described above is executed until the power of the image pickup apparatus 1 is turned off.

As described above, according to the first display control of the present disclosure, as with the case of a touch operation, the user may perform scroll display of the captured images by bringing the finger close to the touch screen 18 and performing tracing (a dragging operation or a flicking operation). In this case, since the finger does not contact the touch screen 18, airy operational feeling can be attained. Furthermore, since the touch screen 18 is not touched, a failure rate of a user's operation may be reduced and finger prints and dirt are prevented from being attached due to the touch operation.

Note that, in the foregoing example, the image pickup apparatus 1 performs the scroll animation by the proximity-and-tracing operation similarly to the case of the touch-and-tracing operation. However, different effects of the scroll animation may be attained (scroll states may be switched from one to another) between the proximity operation and the touch operation. For example, scroll speeds may be different and the numbers of fed images may be different between the proximity operation and the touch operation. More specifically, the scroll speed of the proximity operation may be higher than the scroll speed of the touch operation, or the number of the fed images may be determined such that images are fed one by one in the touch operation and images are fed in a unit of several images, for example. Since different processes are performed between the proximity operation and the touch operation, a more number of operations may be performed.

### Image Display Control in Second Embodiment

Next, second display control performed by the image pickup apparatus 1 (CPU 23) which is image display control according to a second embodiment of the present disclosure will be described. The second display control of the image pickup apparatus 1 is attained by adding a certain function to the first display control described above.

Specifically, when a proximity holding operation performed by the user is detected, an operation menu which is different from those of a normal proximity dragging operation and a normal proximity flicking operation is displayed. The proximity holding operation is an operation of holding a state in which the user's finger is located in a certain position close to the recording device 19 for a predetermined period of time.

### Example of Screen in Second Display Control

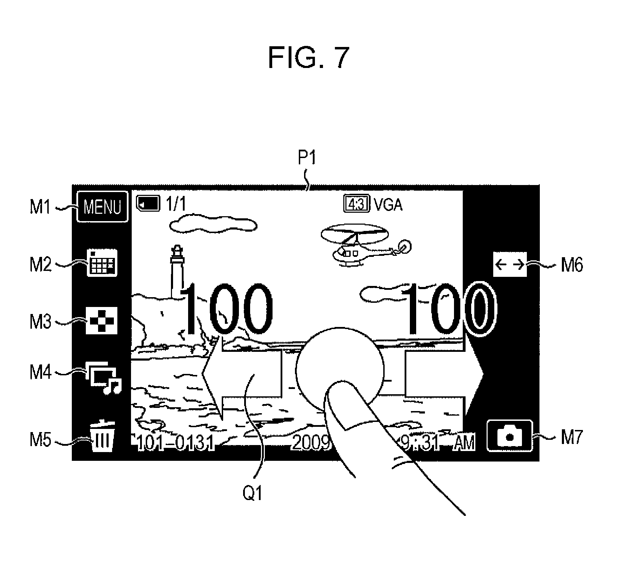

Fig. 7 shows an example of display of the operation menu displayed when the proximity holding operation performed by the user is detected.

In the example shown in Fig. 7, unlike menus of the normal proximity dragging operation and the normal proximity flicking operation, a menu Q1 is displayed to jump to a captured image positioned hundred images forward or backward in a predetermined order when the proximity flocking operation is performed. When the user performed the proximity flicking operation rightward or leftward, a captured image positioned a hundred images forward or backward in a predetermined order is displayed after scrolling, that is, scroll animation is executed.

Note that, although a captured image positioned a hundred images forward or backward is displayed by jumping as content of a menu in the example shown in Fig. 7, the content of the menu displayed by performing the proximity holding operation may be appropriately determined. For example, a jump to a captured image having a date before or after an image of interest or a jump to a captured image included in a different folder may be displayed. Furthermore, the user may select (determine) a menu to be displayed in a setting screen.

### Flowchart of Second Display Control

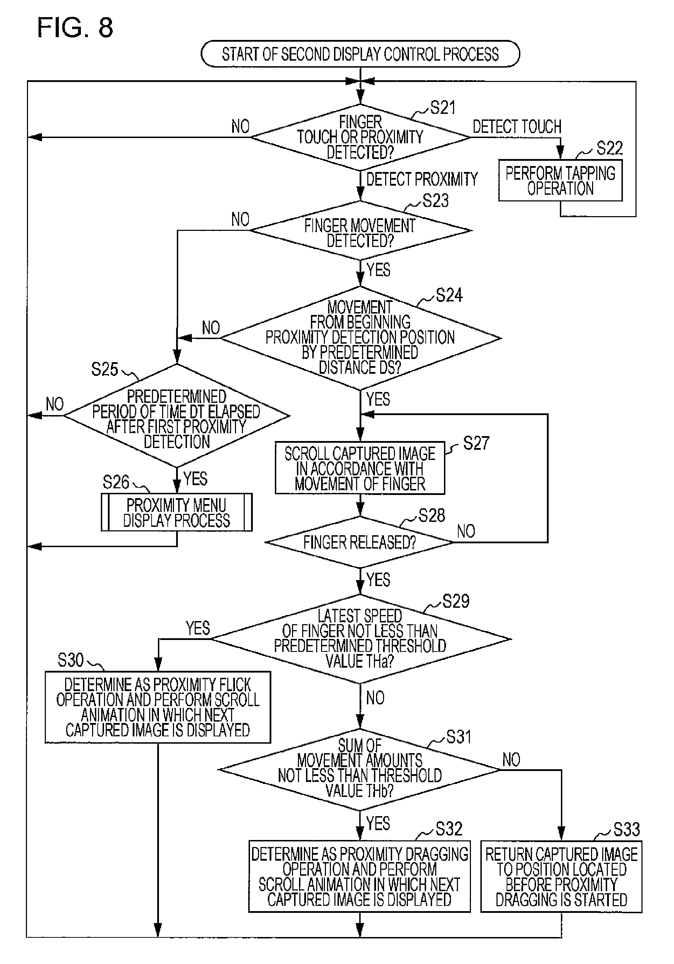

Fig. 8 is a flowchart illustrating second display control performed by the image pickup apparatus 1 (CPU 23).

As described above, the second display control is obtained by newly adding functions to the first display control and is the same as the process shown in Fig. 6 except for a portion relating to the additional functions. More specifically, the second display control is the same as the process shown in Fig. 6 except that processes in step S25 and step S26 are added. Step S21 to step S24 and step S27 to step S33 shown in Fig. 8 correspond to step S1 to step S4 and step S5 to step S11 shown in Fig. 6, respectively. Therefore, descriptions other than descriptions of the processes associated with step S25 and step S26 which are newly added are omitted.

When it is determined that a movement of the finger in the proximity state is detected in step S23, the process proceeds to step S24. On the other hand, when it is determined that a movement of the finger in the proximity state is not detected in step S23, the process proceeds to step S25. Furthermore, also when it is determined that the finger in the proximity state has not moved from the proximity detection position obtained at the beginning by a predetermined distance DS or more, the process proceeds to step S25. Specifically, when it is determined that the finger has not substantially moved from the beginning proximity detection position, the process in step S25 is performed.

In step S25, the image pickup apparatus 1 determines whether a predetermined period of time DT has elapsed after first proximity detection. When it is determined that the predetermined period of time DT has not elapsed after the first proximity detection in step S25, the process returns to step S21.

On the other hand, when it is determined that the predetermined period of time DT has elapsed after the first proximity detection, the process proceeds to step S26 where the image pickup apparatus 1 executes a proximity menu display process. After the proximity menu display process is performed, the process returns to step S21.

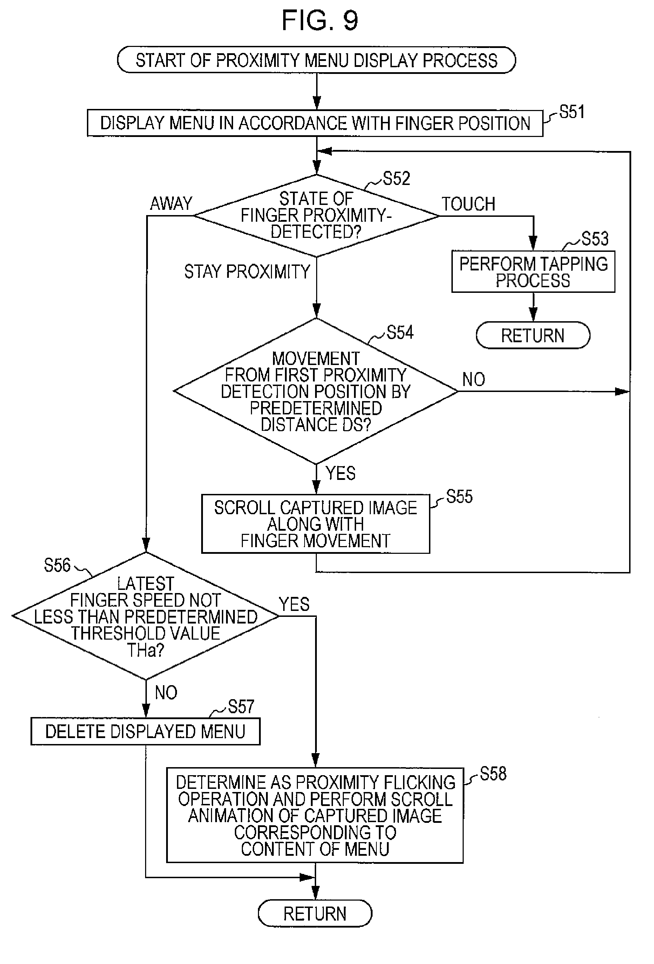

Referring now to a flowchart shown in Fig. 9, the proximity menu display process performed in step S26 will be described in detail.

First, in step S51, the image pickup apparatus 1 causes the touch screen 18 to display a menu in accordance with a position of the finger detected as the proximity state.

Then, the image pickup apparatus 1 detects a subsequent state of the user's finger detected as the proximity state. Specifically, the image pickup apparatus 1 determines whether the finger detected as the proximity state is in a touch state, holds the proximity state, or is moved away.

When it is determined that the touch of the user's finger detected as the proximity state is detected in step S52, the process proceeds to step S53 where the image pickup apparatus 1 executes a predetermined process (tapping process) corresponding to the touch of the finger. Thereafter, the process returns to step S21.

On the other hand, when it is determined that the proximity state of the finger is held in step S52, the process proceeds to step S54 where the image pickup apparatus 1 determines whether the user's finger moves from the first proximity detection position by the distance DS or more. When it is determined that the finger does not move from the first proximity detection position by the predetermined distance DS or more, the process returns to step S52.

On the other hand, when it is determined that the finger moves from the first proximity detection position by the predetermined distance DS or more in step S54, the process proceeds to step S55 where the image pickup apparatus 1 scrolls a captured image in accordance with the movement of the finger detected as the proximity state.

Specifically, in the processes in step S54 and step S55, when the proximity of the user's finger is detected, the menu is displayed, and the finger moves, the captured image is scrolled as with the case of the normal proximity dragging operation.

On the other hand, when it is determined that the finger detected as the proximity state moves away in step S52, the process proceeds to step S56. Then, in step S56, the image pickup apparatus 1 determines whether the latest speed of the finger (a speed immediately before the finger moves away from the screen) is equal to or larger than a predetermined threshold value THa.

When it is determined that the latest speed of the finger is smaller than the threshold value THa in step S56, the process proceeds to step S57 where the image pickup apparatus 1 deletes the menu displayed in step S51.

On the other hand, when it is determined that the latest speed of the finger is equal to or larger than the threshold value THa in step S56, the process proceeds to step S58 where the image pickup apparatus 1 determines that a proximity flicking operation has been performed and performs scroll animation for a captured image corresponding to content of the displayed menu.

In step S56 to step S58, when the user gradually moves away the finger in the proximity state, it is determined that a menu cancel operation is to be performed and the menu is deleted. When the proximity flicking operation is performed, scroll animation for a captured image corresponding to content of the menu.

After step S57 or step S58, the process returns to step S21 shown in Fig. 8.

In the second display control process described above, in addition to the function of the first display control, a proximity flicking operation which is different from the normal proximity flocking operation becomes available in a state in which the proximity is held in a certain position of the touch screen 18. Since a plurality of operations may be performed by the proximity flicking operation and a more number of operations may be performed. Accordingly, operability is improved.

As described above, since the image pickup apparatus serving as the image display control apparatus according to the embodiment of the present disclosure has the scroll animation function corresponding to a proximity operation and a tracing operation, a large number of captured images recorded in the recording device 19 may be more easily viewed.

### Example of Configuration of Computer

The series of processes described above may be executed by hardware or software.

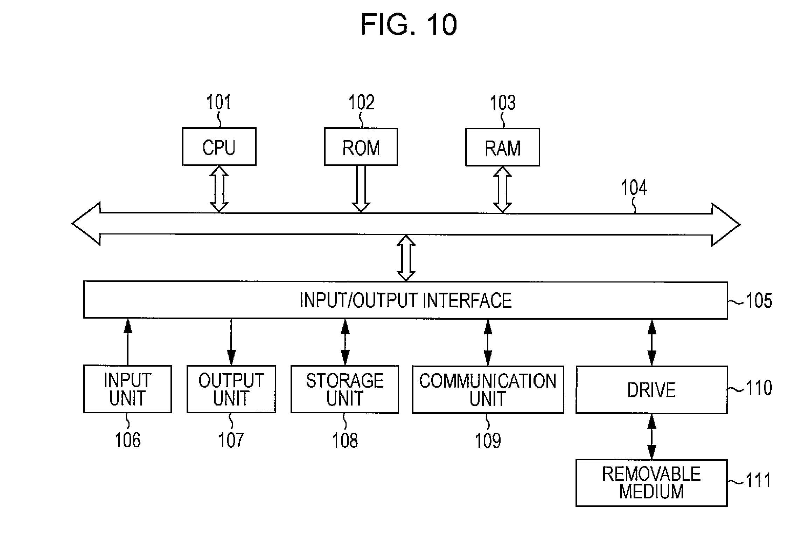

In this case, it is apparent that the image pickup apparatus 1 shown in Fig. 1 may execute the series of processes, and alternatively, a personal computer shown in Fig. 10 may execute the series of processes.

In Fig. 10, a CPU 101 executes various processes in accordance with programs stored in a ROM (Read Only Memory) 102 and programs loaded in a RAM (Random Access Memory) 103 from a storage unit 108. The RAM 103 also stores data used to execute the various processes by the CPU 101 where appropriate.

The CPU 101, the ROM 102, and the RAM 103 are connected to one another through a bus 104. Furthermore, an input/output interface 105 is also connected to the bus 104.

To the input/output interface 105, an input unit 106 including a keyboard and a mouse, an output unit 107 including a touch panel display and a speaker, the storage unit 108 including a hard disk, and a communication unit 109 including a modem and a terminal adapter are connected. The communication unit 109 controls communication with another apparatus (not shown) through a network such as the Internet.

To the input/output interface 105, a drive 110 is also connected where appropriate, and a removable medium 111 such as a magnetic disk, an optical disc, a magneto-optical disc, or a semiconductor memory is attached where appropriate. A computer program read from the removable medium 111 is installed in the storage unit 108 where appropriate.

When the series of processes is to be executed by software, programs included in the software is installed in a computer incorporated in dedicated hardware or a general personal computer capable of executing various functions by installing various programs, for example, by a network or a recording medium.

In this specification, a step of writing a program to be recorded in a recording medium apparently includes processes performed in a certain order in a time-series manner and also includes processes which are not executed in a time-series manner, that is, executed in parallel, or individually executed.

Hereinabove, the liquid crystal display is used as the display unit 17 in which display thereof is controlled by the image display control apparatus according to the present disclosure. However, the present disclosure is applicable to not only the liquid crystal display but also the following display apparatus. Specifically, the present disclosure is applicable to a display apparatus which receives an instruction for display in a unit of a frame, a field, or the like which constitutes a moving image (hereinafter, such a unit is referred to as a comma). In such a display apparatus, a plurality of pixels included in a comma include display elements and some of the display elements are held for a predetermined period of time. Note that, such a display element is referred to as a hold display element hereinafter, and such a display apparatus including a screen including such hold display elements is referred to as a hold display apparatus. Specifically, the liquid crystal display apparatus is merely an example of the hold display apparatus, and the present disclosure is applicable to all hold display apparatuses.

Furthermore, in addition to the hold display device, the present disclosure is applicable to a flat self-luminance display apparatus utilizing an organic EL (Electro Luminescent) device as a light-emitting device. Specifically, the present disclosure is applicable to all display apparatuses including display elements which display pixels constituting an image. Note that such a display apparatus is referred to as a pixel display apparatus. Here, in the pixel display apparatus, it is not necessarily the case that a single pixel corresponds to a single display element.

In other words, any display apparatus in which display thereof is controlled by an image display control apparatus according to the present disclosure may be employed as long as the display apparatus is capable of executing the series of processes described above.

Furthermore, in the foregoing embodiments, the case where the present disclosure is applied to the image pickup apparatus (such as a digital still camera) including the display apparatus (display unit) has been described. However, the image display control according to the present disclosure is applicable to other electronic apparatuses including display apparatuses such as a PDA (Personal Digital Assistants), a cellular phone, a portable game device, a portable reproducing apparatus, a television receiver, and the like.

The embodiments of the present disclosure are not limited to the foregoing embodiments and various modifications may be made without departing from the scope of the present disclosure.

The present disclosure contains subject matter related to that disclosed in Japanese Priority Patent Application JP 2010-284323 filed in the Japan Patent Office on December 21, 2010, the entire contents of which are hereby incorporated by reference.

## Claims

1. An image display control apparatus comprising:
a detector that detects an object being in proximity to a display;
the display; and
a controller that changes from a first image to a second image in response to a movement of said object that remains in proximity to said display.

2. The apparatus of claim 1, wherein
said detector detects multiple touches of said object to said display as a tapping operation.

3. The apparatus of anyone of claims 1 to 2, wherein
said controller responds to said detector detecting said object remaining in proximity to said display while said object moves a predetermined lateral distance over a surface of said display by scrolling the first image off the display while scrolling the second image on the display.

4. The apparatus of anyone of claims 1 to 3, wherein
said detector detects a last lateral speed of said object, and
said controller performs a proximity flick operation when said last lateral speed of said object is less than a predetermined threshold, said proximity flick operation performs scroll animation of said second image on said display.

5. The apparatus of anyone of claims 1 to 4, wherein
said controller determines if a lateral movement amount of said object while remaining in proximity to said display is less than a predetermined threshold, and when less, the controller returns the first image to an initial position on said display before said detector detected said object being in proximity.

6. The apparatus of anyone of claims 1 to 5, wherein
said controller determines if a lateral movement amount of said object while remaining in proximity to said display is more than a predetermined threshold, and when more, the controller scrolls the second image on the display.

7. The apparatus of anyone of claims 1 to 6, wherein
said controller is configured to display a menu when in a proximity flicking operation mode, and jumps to a predetermined image in an ordered set of stored images so said predetermined image is displayed when said object is detected as performing a proximity flicking movement.

8. The apparatus of claim 7, wherein
said ordered set of stored images are ordered by at least one of date and a storage folder.

9. The apparatus of anyone of claims 1 to 8, wherein
said controller displays a proximity menu when a time that said object remains in proximity exceeds a predetermined threshold time.

10. The apparatus of claim 9, wherein
said controller displays said proximity menu in accordance with a position of said object with respect to said display.

11. The apparatus of claim 9 or 10, wherein
said controller deletes the proximity menu when a latest speed of said object when moved away from said display is less than a predetermined threshold speed.

12. The apparatus of anyone of claims 10 to 11, wherein
said controller determines said object performs a proximity flicking movement when a latest speed of said object when moved away from said display is greater than a predetermined threshold speed, and said controller performs a scroll animation of said second image on said display that corresponds with a content of the proximity menu.

13. The apparatus of anyone of claims 1 to 12, further comprising
an electrostatic touch panel that includes said detector and said display.

14. The apparatus of anyone of claims 1 to 13, wherein
said controller performs scroll animation of said first image and said second image with a first effect in response to the touch and with a second effect in response to the object being in proximity to the display.

15. An image display control apparatus comprising:
a detector that detects an object being in proximity to a display;
the display; and
a controller that responds to a change in a proximity of said object by changing from a first image to a second image, said second image being selected from a plurality of images stored in a predetermined order.

16. The apparatus of anyone of claim 1 to 15, wherein
said detector also detects a touch of said object to said display, and
said controller processes the touch differently than said object being in proximity to said display.

17. An image display control method comprising:
detecting with a proximity detector an object being in proximity to a display; and
changing on said display with a controller from a first image to a second image in response to a movement of said object while said object remains in proximity to said display.

18. An image display control method comprising:
detecting with a proximity detector an object being in proximity to a display; and
responding with a controller to a change in a proximity of said object by changing from a first image to a second image, said second image being selected from a plurality of images stored in a predetermined order.
